# EUROPÄISCHE PATENTANMELDUNG

(11) **EP 3 006 253 A1**
(43) Veröffentlichungstag der Anmeldung: **13.04.2016**
(21) Anmeldenummer: 15002343.0
(22) Anmeldetag: 06.08.2015
(51) Int. Cl.: B60L 11/18

(54) **ANORDNUNG AUS MINDESTENS ZWEI ELEKTRISCHEN TRAKTIONSENERGIESPEICHERN**

(30) Priorität: 07.10.2014 DE 102014014926
(71) Anmelder: MAN Truck & Bus AG, 80995 München (DE)
(72) Erfinder: Hessel, Marcel, 80469 München (DE); Kigin, Erdogan, 73760 Ostfildern (DE); John, Dennis, 81371 München (DE)

(57) **Zusammenfassung**

Die Erfindung betrifft eine Anordnung aus mindestens zwei elektrischen Traktionsenergiespeichereinrichtungen, insbesondere für Nutzfahrzeuge, wobei jede der Traktionsenergiespeichereinrichtungen (2, 3) ein Speichermodul (5) zur Speicherung elektrischer Energie, eine mit dem Speichermodul verbundene Schützbox (6) und einen Hochvoltverteiler (7) umfasst, die in ein Gehäuse der Traktionsenergiespeichereinrichtung (4) integriert sind, und am Gehäuse (4) jeder Traktionsenergiespeichereinrichtung (2, 3) mehrere mit dem Hochvoltverteiler und/oder mit der Schützbox (6) verbundene Anschlüsse (8, 9) vorgesehen sind, die jeweils zwei elektrische Kontakte aufweisen. Die Anschlüsse umfassen Hochvoltverteiler-Anschlüsse (9), die mit dem Hochvoltverteiler verbunden sind, und einen zweipoligen Verbindungsanschluss (8), bei dem mindestens ein elektrischer Kontakt mit einem Pol der Schützbox (6) elektrisch verbunden ist. Hierbei sind die mindestens zwei elektrischen Traktionsenergiespeichereinrichtungen (2, 3) über die Anschlüsse (8, 9) miteinander elektrisch verbindbar, derart, dass die Speichermodule (5) der Traktionsenergiespeichereinrichtungen durch elektrisches Verbinden der Verbindungsanschlüsse (8) seriell verschaltet sind, so dass sich eine Systemspannung für die Anordnung in Höhe der Summe der Einzelspannungen der Speichermodule (5) ergibt und Haupt- und Nebenaggregate über die Hochvoltverteiler-Anschlüsse (9) mit der Systemspannung versorgbar sind.

## Beschreibung

Die Erfindung betrifft eine Anordnung aus mindestens zwei elektrischen Traktionsenergiespeichereinrichtungen, insbesondere für Nutzfahrzeuge.

Hybrid-, Plug-In-Hybrid- und Elektrofahrzeuge verfügen über einen elektrischen Traktionsenergiespeicher zur Versorgung eines elektromotorischen Antriebs des Fahrzeugs. Der Traktionsenergiespeicher kann auch zur Aufnahme von Rekuperationsenergie ausgeführt sein. Traktionsenergiespeicher können beispielsweise auf Basis von Akkumulatoren, z. B. Li-Ionen-Batterien, oder auf Basis von Kondensatorspeichern (z. B. Ultracap-Speichern) gebildet sein. Typischerweise ist die in dem Traktionsenergiespeicher enthaltene Energiespeichereinheit modular aufgebaut, wobei einzelne Energiespeicherzellen zu sog. Speicherpacks zusammengefasst werden.

Aus der Praxis ist es ferner bekannt, eine Batterie-Schützbox (englisch "battery junction box") in den Traktionsenergiespeicher zu integrieren. Die Schützbox für Hochvolt(HV)-Traktionsenergiespeicher besteht aus Trennelementen und Absicherungen, um den spannungsführenden Teil des Traktionsenergiespeichers vom Hochvolt(HV)-Bordnetz zu trennen. Derartige als Schützbox bezeichnete Vorrichtungen stellen sicher, dass keine gefährliche Spannung an den berührungsgefährdeten Teilen, wie etwa von außen zugänglichen Kontakten etc., anliegt.

Um insbesondere im Nutzfahrzeugbereich unterschiedlich hohe Spannungsniveaus des Traktionsenergiespeichersystems realisieren zu können, ist es wünschenswert, zwei oder mehrere Traktionsenergiespeicher in einem Nutzfahrzeug einsetzen und die Spannungspotentiale der einzelnen Traktionsenergiespeicher zusammenlegen zu können. Dadurch kann ein gewünschtes Spannungsniveau in einem modularen Ansatz basierend auf bestehenden Traktionsenergiespeichern realisiert werden, und eine vollständige Neuentwicklung der Energiespeicherkomponenten kann vermieden werden.

Hierbei besteht wiederum die Herausforderung, die einzelnen Traktionsenergiespeicher so auszubilden, dass mit der verschalteten Anordnung Haupt- und Nebenaggregate über die bestehenden Hochvoltverteiler und Schnittstellen der einzelnen Traktionsenergiespeicher mit der gleichen Systemspannung versorgt werden können. Mit bestehenden Traktionsenergiespeichern ist das Bereitstellen einer solchen, aus mehreren Traktionsenergiespeichern gebildeten Anordnung nicht oder nur mit einem hohen Integrations- und Montageaufwand möglich.

Es ist somit eine Aufgabe der Erfindung, eine Anordnung aus mindestens zwei elektrischen Traktionsenergiespeichereinrichtungen bereitzustellen, mit der Nachteile herkömmlicher Anordnungen aus zwei oder mehreren Traktionsenergiespeichern vermieden werden können. Die Aufgabe der Erfindung ist es insbesondere, eine Anordnung aus mindesten zwei Traktionsenergiespeichern bereitzustellen, so dass Haupt- und Nebenaggregate über die bestehenden Hochvoltverteiler und Schnittstellen der einzelnen Traktionsenergiespeicher mit der gleichen Systemspannung versorgt werden können. Es ist eine weitere Aufgabe, eine derartige Anordnung bereitzustellen, die mit geringem Integrations- und Montageaufwand aus einzelnen Traktionsenergiespeichern hergestellt werden kann.

Diese Aufgaben werden durch eine Anordnung aus mindestens zwei elektrischen Traktionsenergiespeichereinrichtungen gemäß den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß umfasst die Anordnung mindestens zwei elektrische Traktionsenergiespeichereinrichtungen, insbesondere für Hybrid-, Plug-In- und Elektrofahrzeuge. Jede der Traktionsenergiespeichereinrichtungen (nachfolgend auch als Speichereinrichtung bezeichnet) weist ein Speichermodul zur Speicherung elektrischer Energie, eine mit dem Speichermodul verbundene Batterie-Schützbox (nachfolgend als Schützbox bezeichnet) und einen Hochvoltverteiler auf, die in ein Gehäuse der Speichereinrichtung integriert sind. Am Gehäuse jeder Speichereinrichtung sind mehrere mit dem Hochvoltverteiler und/oder mit der Schützbox verbundene Anschlüsse, z. B. in Form von Anschlussbuchsen, angeordnet, die jeweils zwei elektrische Kontakte aufweisen. Die Anschlüsse umfassen insbesondere Hochvoltverteiler-Anschlüsse, die mit dem Hochvoltverteiler verbunden sind bzw. von diesem versorgt werden, und einen zweipoligen Verbindungsanschluss, bei dem mindestens ein elektrischer Kontakt mit einem Pol der Schützbox elektrisch verbunden ist und damit über die Schützbox mittelbar mit einem Pol des Speichermoduls elektrisch verbunden ist.

Das Speichermodul zur Speicherung elektrischer Energie kann als Speicherpack aus einzelne Energiespeicherzellen, z. B. als Li-Ionen-Zellen, ausgebildet sein und erzeugt in der Regel eine Nominalspannung > 100 V. Die Schützbox bezeichnet eine Vorrichtung, die Trennelemente und Absicherungen enthält, um den spannungsführenden Teil der Speichereinrichtung vom Hochspannungs(HV)-Bordnetz zu trennen. Die Anschlüsse und der Hochvoltverteiler sind über die Schützbox mit dem Speichermodul verbindbar. Es wurde bereits vorstehend erwähnt, dass eine derartige Schützbox sicherstellt, dass keine gefährliche Spannung an berührungsgefährdeten Teilen der elektrischen Energiespeichervorrichtung anliegt.

Gemäß der vorliegenden Erfindung umhaust das Gehäuse jeder der elektrischen Speichereinrichtungen ferner einen Hochvoltverteiler (englisch "High Voltage Distribution" (HVD)). Dies ist eine Hochspannungsverteilungseinrichtung, die zur Strom- und Spannungsverteilung ausgebildet ist. Ein derartiger Hochvoltverteiler dient zur Strom- und Spannungsverteilung für weitere im Fahrzeugsystem angeschlossene Komponenten. Dies können weitere Hochvoltkomponenten verschiedener Leistungsklassen sein, z. B. Nebenaggregate. Die Hochspannungsverteilungseinrichtung ist somit eingerichtet, Energie aus dem Antriebsstrang aufzunehmen und/oder an das Speichermodul für elektrische Energie weiterzuleiten und Energie aus dem Speichermodul zum Antrieb des Fahrzeugs oder zur Versorgung von Nebenaggregate zu liefern.

Der Hochvoltverteiler umfasst eine Mehrzahl von Leistungs- und Nebenaggregatsschnittstellen in Form entsprechender Hochspannungsleitungen mit entsprechenden Absicherungen. Die am Gehäuse angeordneten Hochvoltverteiler-Anschlüsse sind mit dem Hochvoltverteiler elektrisch verbunden, um z. B. einen Anschluss, der als Hochvolt-Ausgang genutzt wird, mit Spannung und Strom zu versorgen. Der Hochvoltverteiler ist somit direkt in das Gehäuse der elektrischen Traktionsenergiespeichereinrichtung integriert, so dass in einer baulichen Einheit sowohl das Speichermodul für die elektrische Energie, die Batterie-Schützbox als auch der Hochvoltverteiler bereitgestellt werden. Die Integration des Hochvoltverteilers in das Systemgehäuse der Speichereinrichtung führt zu einer Reduktion des Verkabelungsaufwandes beim Anschluss der Speichereinrichtung und zum Entfall von Steckern. Ferner kann der Hochvoltverteiler bereits separat vormontiert und im Traktionsenergiespeicher verbaut werden, so dass eine schnellere Endmontage des Energiespeichers, z. B. an einem LKW oder einem Bus, ermöglicht wird.

Gemäß der vorliegenden Erfindung sind die mindestens zwei elektrischen Traktionsenergiespeichereinrichtungen über die am jeweiligen Gehäuse vorgesehenen Anschlüsse miteinander elektrisch verbindbar und/oder verbunden, derart, dass die Speichermodule der Traktionsenergiespeichereinrichtungen durch elektrisches Verbinden der Verbindungsanschlüsse seriell verschaltet sind, so dass sich eine Systemspannung für die Anordnung in Höhe der Summe der Einzelspannungen der Speichermodule ergibt und Haupt- und Nebenaggregate über die Hochvoltverteiler-Anschlüsse mit der Systemspannung versorgbar sind.

Ein besondere Vorzug der Erfindung liegt somit darin, dass durch eine einfache Verschaltung, z. B. durch Verkabeln, der einzelnen Traktionsenergiespeichereinrichtungen über den am Gehäuse befindlichen Verbindungsanschluss und über zumindest einen Hochvoltverteiler-Anschluss eine Anordnung mit höherer Systemspannung bereitstellbar ist, wobei die Basiskomponenten, d. h. die Traktionsspeichereinrichtungen und deren Gehäuse und Hochvoltschnittstellen, unverändert bleiben können, wodurch Entwicklungskosten signifikant reduziert werden können.

Gemäß einer besonders bevorzugten Ausführungsform der Erfindung sind die Hochvoltverteiler über die Hochvoltverteiler-Anschlüsse parallel miteinander verschaltet. Gemäß dieser Ausführungsform weisen die Hochvoltverteiler jeweils eine erste Leitung und eine zweite Leitung auf, von denen eine als Plusleitung und eine als Minusleitung dient, wobei jeweils einer der zwei Kontakte der Hochvoltverteiler-Anschlüsse mit der ersten Leitung und der andere Kontakt mit der zweiten Leitung zur Ausbildung eines zweipoligen Anschlusses verbunden ist.

Besonders vorteilhaft an dieser Ausführungsform ist, dass hiermit prinzipiell beliebig viele Speichereinrichtungen auf einfache Weise durch serielles Verschalten der Speichermodule und paralleles Verschalten der Hochvoltverteiler zu einem Gesamtsystem kombiniert werden können.

Für das parallele Verschalten der Hochvoltverteiler einer Anordnung aus zwei Speichereinrichtungen wird jeweils ein Hochvoltverteiler-Anschluss jeder Speichereinrichtung benötigt. Die andern Hochvoltverteiler-Anschlüsse können zur Versorgung von einem Hauptaggregat oder von Nebenaggregaten genutzt werden.

Für das parallele Verschalten der Hochvoltverteiler einer Anordnung aus mehr als zwei Speichereinrichtungen werden jeweils zwei Hochvoltverteiler-Anschlüsse jeder Speichereinrichtung benötigt, um einen Hochvoltverteiler parallel mit dem Hochvoltverteiler der vorhergehenden und dem Hochvoltverteiler der nachfolgenden Speichereinrichtungen zu verbinden. Dies gilt nicht für die erste und letzte Speichereinrichtung der Anordnung, bei denen jeweils wiederum nur ein Hochvoltverteiler-Anschluss benötigt wird.

Bei einer vorteilhaften Variante dieser Ausgestaltungsform ist bei einer ersten der mindestens zwei Speichereinrichtungen der zweite Kontakt des Verbindungsanschlusses, der nicht mit einem ersten Pol, z. B. Minuspol, der Schützbox verbunden ist, mit der ersten Leitung, z. B. Minusleitung, des Hochvoltverteilers verbunden, wobei die zweite Leitung, z. B. Plusleitung, des Hochvoltverteilers mit dem zweiten Pol, z. B. Pluspol, der Schützbox verbunden ist. Ferner ist der Verbindungsanschluss der zweiten Speichereinrichtung zweipolig mit dem zweipoligen Anschluss der Schützbox der jeweiligen Speichereinrichtung verbunden. Dies gilt auch für alle weiteren Speichereinrichtungen der Anordnung. Die erste Speichereinrichtung dient hierbei als Master-Einheit, die anderen Speichereinrichtungen als Slave-Einheiten.

Gemäß einer weiteren Ausgestaltungsform umfasst die Anordnung genau zwei Speichereinrichtungen, wobei alle elektrischen Kontakte der Hochvoltverteiler-Anschlüsse der ersten Speichereinrichtung auf Minus-Potential der Gesamtsystemspannung liegen und alle elektrischen Kontakte der Hochvoltverteiler-Anschlüsse der zweiten Speichereinrichtung auf Plus-Potential der Gesamtsystemspannung liegen.

Gemäß dieser Ausgestaltungsform kann z. B. ein Nebenaggregat über die freien, d. h. nicht zur Verschaltung der Speichereinrichtungen benötigten, Hochvoltverteiler-Anschlüsse mit der Systemspannung versorgt werden, indem einer der zwei elektrischen Kontakte eines freien Hochvoltverteiler-Anschlusses der ersten Speichereinrichtung mit einem der zwei elektrischen Kontakte eines freien Hochvoltverteiler-Anschlusses der zweiten Speichereinrichtung verbunden wird. Diese Variante ermöglicht ferner eine einfache Integration einer Gleichspannungsladeschnittstelle.

Eine Variante dieser Ausgestaltungsform sieht vor, dass der Hochvoltverteiler der zweiten Speichereinrichtung in Reihe mit dem Speichermodul der zweiten Speichereinrichtung geschaltet ist, welches über den Verbindungsanschluss der zweiten Speichereinrichtung und über den Verbindungsanschluss der ersten Speichereinrichtung in Reihe mit dem Speichermodul der ersten Speichereinrichtung geschaltet ist. Ferner ist das Speichermodul der ersten Speichereinrichtung in Reihe mit dem Hochvoltverteiler der ersten Speichereinrichtung geschaltet.

Gemäß einer weiteren Variante dieser Ausgestaltungsform weist die erste Speichereinrichtung am Gehäuse einen zweipoligen Generatoranschluss zum Anschluss eines Generators auf, wobei der Hochvoltverteiler der ersten Speichereinrichtung mit einem ersten Pol des Generatoranschlusses elektrisch verbunden ist und der Hochvoltverteiler der zweiten Speichereinrichtung über die Verbindungsanschlüsse der ersten und zweiten Speichereinrichtungen mit dem zweiten Pol des Generatoranschlusses elektrisch verbunden ist.

Um eine externe Gleichstromladeschnittstelle bereitzustellen, kann ein Gleichstrom-Ladeanschluss (DC-Ladeschnittstelle) am Gehäuse der ersten Speichereinrichtung angeordnet sein. Über die DC-Ladeschnittstelle können das Speichermodul der ersten Speichereinrichtung und das Speichermodul der zweiten Speichereinrichtung extern aufgeladen werden. Hierbei ist erster Pol des Gleichstrom-Ladeanschlusses über eine Absicherung und eine Trennvorrichtung, die in der Schützbox angeordnet sind, mit dem Hochvoltverteiler der ersten Speichereinrichtung verbunden. Ferner ist ein zweiter Pol des Gleichstrom-Ladeanschlusses über eine Absicherung und eine Trennvorrichtung, die in der Schützbox angeordnet sind, mit demjenigen Verbindungspfad verbunden, der den zweiten Pol des Generatoranschlusses mit einem Pol des Verbindungsanschlusses der ersten Speichereinrichtung elektrisch verbindet.

Gemäß einem weiteren Aspekt der Erfindung können die Anschlüsse an einer Gehäusewand des Gehäuses, die benachbart zu dem Hochvoltverteiler ist, angeordnet sein. Dies ermöglicht einen kompakten Aufbau und kurze Anschlussleitungen im Inneren des Gehäuses.

Die Erfindung betrifft ferner ein Kraftfahrzeug, insbesondere ein Nutzfahrzeug, mit einer Anordnung aus mindestens zwei elektrischen Traktionsenergiespeichereinrichtungen wie hierin offenbart.

Weitere Einzelheiten und Vorteile der Erfindung werden im Folgenden unter Bezug auf die beigefügten Zeichnungen beschrieben. Es zeigen:
- Figur 1: ein Blockschaltbild einer Anordnung aus mindestens zwei elektrischen Speichereinrichtungen gemäß einem Ausführungsbeispiel;
- Figur 2: ein Blockschaltbild einer Anordnung aus drei elektrischen Speichereinrichtungen gemäß einem Ausführungsbeispiel; und
- Figur 3: ein Blockschaltbild einer Anordnung aus zwei elektrischen Speichereinrichtungen gemäß einem Ausführungsbeispiel.

Gleiche oder funktional äquivalente Elemente sind in allen Figuren mit denselben Bezugszeichen bezeichnet. Die gestrichelten Linien stellen Signalleitungen, die fett gezeichneten Linien Hochspannungsleitungen dar.

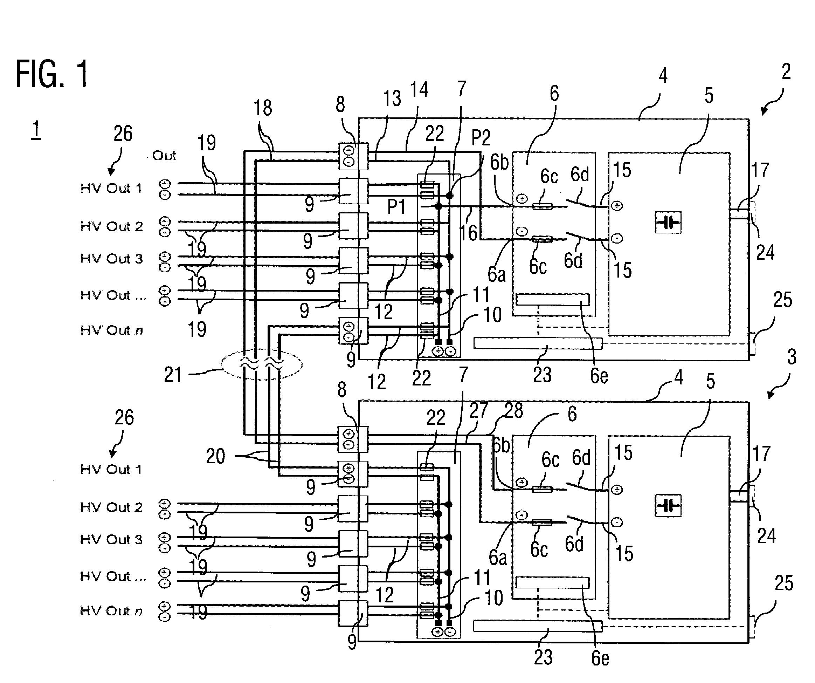

Figur 1 illustriert eine Anordnung 1 aus zwei elektrischen Traktionsenergiespeichereinrichtungen 2, 3 gemäß einem ersten Ausführungsbeispiel.

Jeder Traktionsenergiespeicher 2, 3 umfasst ein Gehäuse 4, in das die nachfolgend beschriebenen Komponenten des Traktionsenergiespeichers 2, 3 integriert sind.

In dem Gehäuse 4 befindet sich ein Speichermodul 5 für elektrische Energie, das wiederum selbst von einem Gehäuse umhaust ist (nicht dargestellt). Dieses Speichermodul 5 ist aus einzelnen Zellen, z. B. Li-Ionen-Zellen, aufgebaut, die wiederum zu einem Energiespeicherpack zusammengeschaltet sind. Ferner sind Kühlplatten zur Kühlung des Speicherelements 5 vorgesehen (nicht gezeigt). In dem Gehäuse 4 ist ferner ein Batteriemanagementsystem 23 integriert, das über eine Signalleitung die Lade- und Entladevorgänge des Speichermoduls 5 steuert. Derartige Batteriemanagementsysteme 23 und Speichermodule 5 sind an sich aus dem Stand der Technik bekannt und müssen hier nicht näher beschrieben werden.

Das Batteriemanagementsystem 23 ist über eine Signalleitung mit einer Schnittstelle 25 verbunden, über die das Batteriemanagementsystem 23 Steuersignale und Sensordaten empfangen kann. Das Speichermodul 5 für elektrische Energie ist über eine Hochspannungsleitung 17 mit einem Hochspannungstrennschalter 24 (englisch "high voltage service disconnect") verbunden. Der Hochspannungstrennschalter 24 dient zu Wartungs- und Servicezwecken am elektrischen Antriebssystem und garantiert die Spannungsfreiheit am Fahrzeug, beispielsweise als Ausführung eines HV-Steckerkontaktes. Durch das Öffnen dieses Trennschalters 24 wird der HV-Pfad in das Speichermodul 5 unterbrochen und durch Zusatzfunktionalitäten z. B. die Ansteuerung der Hauptschütze 6d unterbrochen, so dass diese nicht schließen können. Der Traktionsspeicher 2, 3 ist in diesem Fall vom Hochspannungs-Bordnetz getrennt.

In dem Systemgehäuse 4 der Traktionsenergiespeichereinrichtung 2,3 ist ferner eine HV-Batterie-Schützbox 6 integriert. Es wurde vorstehend bereits erwähnt, dass die Schützbox Absicherungen 6c und Trennelemente bzw. elektrische Schalter 6d umfasst, um den spannungsführenden Teil des Traktionsenergiespeichers 2, 3 vom Hochspannungs-Bordnetz zu trennen.

In der Schützbox 6 ist ferner ein Steuergerät 6e verbaut, das von dem Batteriemanagementsystem 23 über eine Signalleitung gesteuert werden kann. Das Steuergerät 6e enthält die Leistungselektronik zur Steuerung der Trennelemente 6d.

Die Absicherungen 6c sind Sicherungen, z. B. in der vorliegenden Ausführung als Schmelzsicherungen ausgeführt, welche im Fehlerfall eines Kurzschlusses im System durchschmelzen und somit den Traktionsspeicher vom HV-Bordnetz trennen.

In dem Systemgehäuse 4 des Traktionsenergiespeichers 2, 3 ist ferner ein Hochvoltverteiler 7 integriert. Der Hochvoltverteiler 7 dient zur Strom- und Spannungsverteilung für weitere im Fahrzeugsystem angeschlossene Komponenten und ist, wie in Figur 1 gezeigt, direkt in das Gehäuse 4 des Traktionsenergiespeichers 2, 3 integriert. Je nach Fahrzeuganforderungen können hiermit eine variable Anzahl von Leistungs- und Nebenaggregatsschnittstellen jeweils inklusive Absicherung 22 in das Gehäuse 4 der Traktionsenergiespeichereinrichtung 2, 3 integriert werden.

Hierzu sind an einer Gehäusewand des Gehäuses 4, die vorzugsweise benachbart zu dem Hochvoltverteiler 7 ist, mehrere Anschlüsse angeordnet, die jeweils zwei elektrische Kontakte aufweisen. Die Anschlüsse umfassen n Hochvoltverteiler-Anschlüsse 9, wobei im gezeigten Beispiel n = 5 ist. Es wird betont, dass die Anzahl der Hochvoltverteiler-Anschlüsse 9, d. h. die Anzahl n, beliebig gewählt werden kann, um die gewünschte Zahl von Hochvoltschnittstellen bereitzustellen. Die mit dem Bezugszeichen 9 bezeichneten Anschlüsse werden als Hochvoltverteiler-Anschlüsse bezeichnet, da sie mit dem Hochvoltverteiler 7 elektrisch verbunden sind. Der Hochvoltverteiler 7 hat eine erste Leitung 10 (Minusleitung) und eine zweite Leitung 11 (Plusleitung), wobei jeweils einer der zwei Kontakte der Hochvoltverteiler-Anschlüsse 9 mit der Plusleitung 11 und einer mit der Minusleitung 10 zur Ausbildung eines zweipoligen Anschlusses verbunden ist. Die Plusleitung 11 und die Minusleitung 10 können beispielsweise als Stromschienen ausgeführt sein.

Die Anschlüsse umfassen ferner einen zweipoligen Verbindungsanschluss 8, bei dem mindestens ein elektrischer Kontakt über die Leitung 14 mit einem Pol 6a, z. B. dem Minuspol, der Schützbox 6 elektrisch verbunden ist. Im geschlossenen Zustand der Trennvorrichtung 6d ist die Leitung 14 mit dem Minuspol des Speichermoduls 5 verbunden.

Der interne Aufbau der beiden Traktionsenergiespeicher 2 und 3 unterscheidet sich lediglich in der internen Verschaltung des zweipoligen Verbindungsanschlusses 8. Bei der ersten Speichereinrichtung 3, die als Master-Speichereinrichtung dient, ist ein Kontakt des Verbindungsanschlusses 8, wie vorstehend bereits erwähnt, durch die Leitung 14 mit dem Minuspol 6a der Schützbox verbunden. Der zweite Kontakt des Verbindungsanschlusses 8 ist durch die Leitung 13 am Punkt P2 mit der Minusleitung 10 des Hochvoltverteilers 7 verbunden. Die zweite Leitung 11 des Hochvoltverteilers 7 (Plusleitung 11) ist am Punkt P1 mit dem positiven Pol 6b der Schützbox 6 verbunden.

Dagegen ist der Verbindungsanschluss 8 der zweiten Traktionsenergiespeichereinrichtung 3 über die Leitungen 27, 28 zweipolig mit dem zweipoligen Anschluss 6a, 6b der Schützbox 6 und damit dem Energiespeichermodul der zweiten Speichereinrichtung 3 verbunden.

Die elektrischen Kontakte der beiden Verbindungsanschlüsse sind über die externen Leitungen 18 miteinander verbunden.

Damit sind die Speichermodule 5 des ersten und des zweiten Energiespeichers 2, 3 miteinander seriell verschaltet. Ausgehend vom Punkt P2 erfolgt das Abgreifen der Spannung des Speichermoduls 5 der zweiten Speichereinrichtung 3, die beispielhaft 400 V beträgt, durch die Leitung 13, den Verbindungsanschluss 8 des oberen Energiespeichers 2, die Verbindungsleitungen 18, den Verbindungsanschluss 8 des unteren Energiespeichers 3 und die Leitungen 27, 28. Anschließend erfolgt durch die Leitungen 14 und 16 das Abgreifen der Spannung des Speichermoduls 5 der ersten Speichereinrichtung 2, die beispielhaft ebenfalls 400 V beträgt. Dadurch liegt am Hochvoltverteiler 7 der ersten Speichereinrichtung 2 eine Systemspannung von 800 V an.

Damit am Hochvoltverteiler 7 der zweiten Speichereinrichtung 3 dieselbe Systemspannung von 800 V anliegt, sind die beiden Hochvoltverteiler 7 parallel verschaltet. Dies erfolgt über die Leitungen 20, die einen Hochvoltverteiler-Anschluss 9 der ersten Speichereinrichtung 2 mit einem Hochvoltverteiler-Anschluss 9 der zweiten Speichereinrichtung 3 verbinden.

Die freien Hochvoltverteiler-Anschlüsse 9 der ersten Speichereinrichtung 2 als auch der zweiten Speichereinrichtung 3 bilden somit zweipolige Hochvoltschnittstellen 26 aus, über die Nebenaggregate mit der Systemspannung von 800 V versorgt werden können.

Die Wellenlinien 21 in Figur 1 deuten an, dass prinzipiell in analoger Weise nicht nur eine zweite Speichereinrichtung 3, sondern mehrere derartige zweite Speichereinrichtungen 3 mit dem ersten Energiespeicher 2 verschaltet werden können, wobei die Speichermodule 5 seriell und die Hochvoltverteiler 7 parallel verschaltet sind. Die Gesamtsystemspannung der Anordnung ergibt sich dann aus der Summe der Einzelspannungen der Speichermodule 5, wobei diese auch an jedem freien Hochvoltverteilerausgang aller Hochvoltverteiler 7 anliegt.

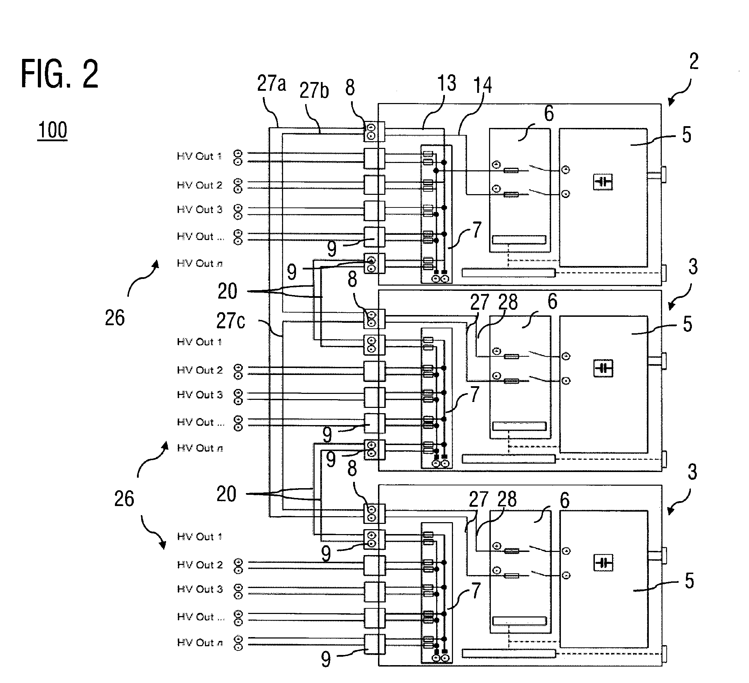

Die ist beispielhaft in Figur 2 für eine Anordnung 100 aus drei elektrischen Speichereinrichtungen illustriert. Die erste Speichereinrichtung 2 ist baugleich zu der ersten Speichereinrichtung 2 der Figur 1 ausgeführt. Die zweite und dritte Speichereinrichtungen 3 der Figur 2 sind baugleich zu der zweiten Speichereinrichtung 3 der Figur 1 ausgeführt.

Die serielle Verschaltung der Energiespeichermodule 5 erfolgt wiederum über die Verbindungsanschlüsse 8 und die Leitungen 27a, 27b, 27c. Beträgt die Höhe der Einzelspannungen der Speichermodule 5 wiederum beispielhaft 400V, ergibt sich eine Gesamtsystemspannung von 1200 V.

Die parallele Verschaltung der Hochvoltverteiler 7 erfolgt wiederum über die Hochvoltverteiler-Anschlüsse 9 und die Leitungen 20. Hierbei ist ersichtlich, dass die erste bzw. letzte Speichereinrichtung der Anordnung jeweils einen ihrer Hochvoltverteiler-Anschlüsse 9 benötigt, um ihren Hochvoltverteiler 7 in Parallelschaltung elektrisch mit dem Hochvoltverteiler 7 des nachfolgenden bzw. vorhergehenden Traktionsenergiespeichers zu verbinden. Die mittlere Traktionsenergiespeichereinrichtung benötigt jeweils zwei der Hochvoltverteiler-Anschlüsse 9, um ihren Hochvoltverteiler 7 parallel mit den Hochvoltverteilern 7 der ersten und der letzten Speichereinrichtung zu verbinden. Die anderen freien Hochvoltverteiler-Anschlüsse können zur Versorgung von einem Hauptaggregat oder von Nebenaggregaten genutzt werden.

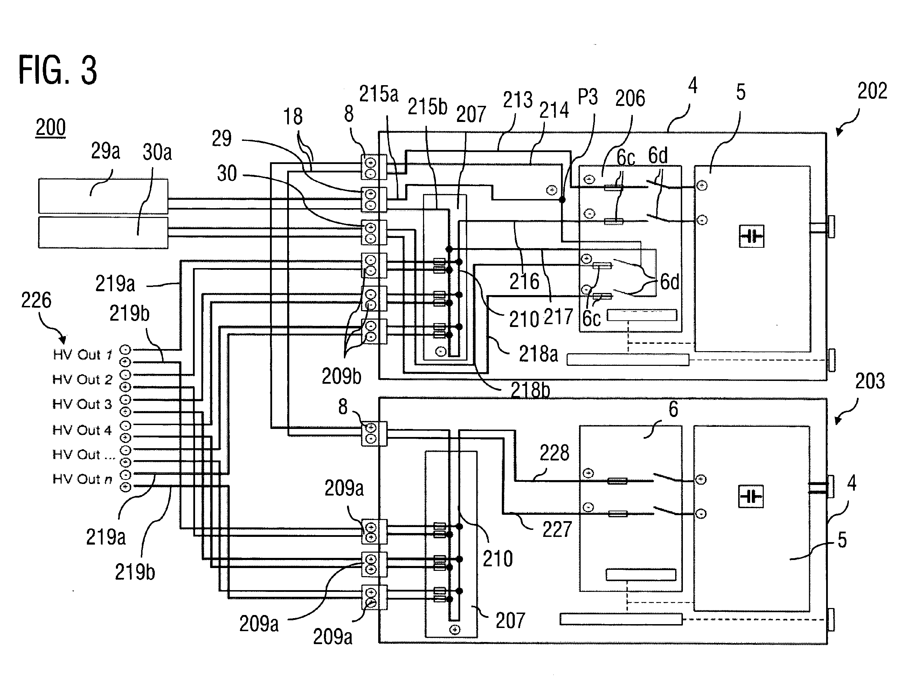

Figur 3 zeigt ein Blockschaltbild einer Anordnung 200 aus zwei elektrischen Speichereinrichtungen 202, 203 gemäß einem weiteren Ausführungsbeispiel. Hierbei entsprechen Komponenten mit gleichen Bezugszeichen den Komponenten der Figur 1 und werden nicht gesondert beschrieben.

Die Besonderheit dieses Ausführungsbeispiels liegt darin, dass alle elektrischen Kontakte der Hochvoltverteiler-Anschlüsse 209b der ersten Speichereinrichtung 202 auf Minus-Potential der Gesamtsystemspannung liegen und alle elektrischen Kontakte der Hochvoltverteiler-Anschlüsse 209a der zweiten Speichereinrichtung 203 auf Plus-Potential der Gesamtsystemspannung liegen. Mit anderen Worten haben beide elektrischen Kontakte jedes Hochvoltverteiler-Anschlusses 209a das gleiche Potential. Eben haben beide elektrischen Kontakte jedes Hochvoltverteiler-Anschlusses 209b das gleiche Potential. Dies ist durch die "-"-Zeichen bzw. die "+"-Zeichen für die Hochvoltverteiler-Anschlüsse 209b bzw. 209a illustriert. Hierzu sind die beiden Hochvoltverteiler 207 so ausgebildet, dass eine Leitung 210 alle Anschlusspunkte für die elektrischen Kontakte der Hochvoltverteiler-Anschlüsse 209a, 209b verbindet.

Damit über Hochvoltverteiler-Anschlüsse 209b bzw. 209a eine Gesamtsystemspannung abgreifbar ist, sind die beiden Hochvoltverteiler 207 und die beiden Energiespeichermodule 5 in Reihe geschaltet, wobei die Energiespeichermodule 5 zwischen den Hochvoltverteilern 207 in der Reihenschaltung angeordnet sind.

Beispielsweise ist der Hochvoltverteiler 207 der zweiten Speichereinrichtung 203 durch die Leitung 228 in Reihe mit dem Speichermodul 5 der zweiten Speichereinrichtung 203 geschaltet ist, welches über die Leitung 227 und den Verbindungsanschluss 8 der zweiten Speichereinrichtung 203 und über den Verbindungsanschluss 8 der ersten Speichereinrichtung 202 und die Leitungen 18, 213 in Reihe mit dem Speichermodul 5 der ersten Speichereinrichtung 202 geschaltet ist. Das Speichermodul 5 der ersten Speichereinrichtung 202 ist weiter durch die Leitung 216 in Reihe mit dem Hochvoltverteiler 207 der ersten Speichereinrichtung 202 geschaltet.

Die erste Speichereinrichtung 202 weist in ihrem Gehäuse 4 ferner einen zweipoligen Generatoranschluss 29 zum Anschluss eines Generators 29a auf, wobei der Hochvoltverteiler 207 der ersten Speichereinrichtung 202 durch die Leitung 215b mit einem korrespondierenden Pol des Generatoranschlusses 29 verbunden ist. Der Hochvoltverteiler 207 der zweiten Speichereinrichtung 203 ist über die Verbindungsanschlüsse 8 der ersten und zweiten Speichereinrichtungen 202, 203 sowie die Leitungen 18, 214 und 215a mit dem zweiten Pol des Generatoranschlusses 29 elektrisch verbunden.

Für Hybrid- und Elektrofahrzeuge ist es vorteilhaft, das Fahrzeug durch die Infrastruktur 30a zur Reichweitenverlängerung (z. B. Ladesäulen) laden zu können. Dafür steht im Ausführungsbeispiel der Figur 3 eine Gleichstromladeschnittstelle, nachfolgend als Gleichstrom-Ladeanschluss 30 bezeichnet, zur Verfügung. Der Gleichstrom-Ladeanschluss 30 dient zur externen Aufladung des Speichermoduls 5 der ersten Speichereinrichtung 202 und des Speichermoduls 5 der zweiten Speichereinrichtung 203. Hierbei ist ein erster Pol des Gleichstrom-Ladeanschlusses 30 über eine Leitung 218a mit einer separaten Absicherung 6c und Trennvorrichtung 6d, die in der Schützbox 206 angeordnet sind, verbunden. Über die Leitung 217 erfolgt dann eine Verbindung zum Hochvoltverteiler 207 der ersten Speichereinrichtung 202. Der zweite Pol des Gleichstrom-Ladeanschlusses 30 ist über die Leitung 218b ebenfalls über eine weitere separate Absicherung 6c und Trennvorrichtung 6d, die in der Schützbox 206 angeordnet sind, am Punkt P3 mit einem Verbindungspfad 214, 215a verbunden, der den zweiten Pol des Generatoranschlusses 30 mit einem Pol des Verbindungsanschlusses 8 der ersten Speichereinrichtung 202 verbindet.

Im Unterschied zur den Ausführungsvarianten der Figuren 1 und 2 kann nur die Systemspannung von z. B. 800 V nicht direkt an einem Hochvoltverteiler-Anschluss 209a oder 209b abgegriffen werden. Stattdessen bildet einer der zwei elektrischen Kontakte eines freien Hochvoltverteiler-Anschlusses 209b der ersten Speichereinrichtung 202 mit einem der zwei elektrischen Kontakte eines freien Hochvoltverteiler-Anschlusses 209a der zweiten Speichereinrichtung 203 einen virtuellen Hochvoltverteiler-Anschluss 226, was durch die Leitungen 219a und 219b in Figur 3 dargestellt ist.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Anordnung aus mehreren Traktionsenergiespeichereinrichtungen
- 2, 3: Traktionsenergiespeichereinrichtung
- 4: Gehäuse
- 5: Speichermodul
- 6,206: Batterieschützbox
- 6a, 6b: Anschlusspole
- 6c: Absicherung
- 6d: Trennvorrichtung
- 6e: Steuergerät
- 7, 207: Hochvoltverteiler
- 8: Verbindungsanschluss
- 9: Hochvoltverteiler-Anschluss
- 10: Minusleitung
- 11: Plusleitung
- 12-20: Hochspannungsleitungen
- 21: Platzhalter für weitere optionale Energiespeichereinrichtungen
- 22: Absicherung
- 23: Batteriemanagementsystem
- 24: Hochspannungstrennschalter
- 25: Schnittstelle für Steuersignale und Sensordaten
- 26: Hochspannungsausgänge
- 27a, 27b, 27c: Hochspannungsleitungen
- 27,28: Hochspannungsleitungen
- 29: Generatoranschluss
- 29a: Generator
- 30: Gleichstromladeanschluss
- 30a: Gleichstromladeinfrastruktur
- 100, 200: Anordnung aus mehreren Traktionsenergiespeichereinrichtungen
- 202, 203: Traktionsenergiespeichereinrichtungen
- 209a, 209b: Hochvoltverteiler-Anschluss
- 213, 214, 216, 217, 215a, 215b, 218a,218b: Hochspannungsleitungen
- 219a, 219b: Anschlussleitungen
- 226: Hochspannungsausgänge
- 227,228: Hochspannungsleitungen

## Patentansprüche

1. Anordnung (1; 100; 200) aus mindestens zwei elektrischen Traktionsenergiespeichereinrichtungen (2, 3; 202, 203), insbesondere für Hybrid-, Plug-In-, und Elektrofahrzeuge, wobei
jede der Traktionsenergiespeichereinrichtungen (2, 3; 202, 203) ein Speichermodul (5) zur Speicherung elektrischer Energie, eine mit dem Speichermodul verbundene Schützbox (6; 206) und einen Hochvoltverteiler (7; 207) umfasst, die in ein Gehäuse der Traktionsenergiespeichereinrichtung (2, 3; 202, 203) integriert sind, und
am Gehäuse (4) jeder Traktionsenergiespeichereinrichtung (2, 3; 202, 203) mehrere mit dem Hochvoltverteiler und/oder mit der Schützbox verbundene Anschlüsse (8, 9; 8, 29, 30, 209a, 209b) vorgesehen sind, die jeweils zwei elektrische Kontakte aufweisen, wobei die Anschlüsse Hochvoltverteiler-Anschlüsse (9; 209a, 209b), die mit dem Hochvoltverteiler verbunden sind, und einen zweipoligen Verbindungsanschluss (8), bei dem mindestens ein elektrischer Kontakt mit einem Pol der Schützbox (6; 206) elektrisch verbunden ist, umfassen,
wobei die mindestens zwei elektrischen Traktionsenergiespeichereinrichtungen (2, 3; 202, 203) über die Anschlüsse (8, 9; 8, 29, 30, 209a, 209b) miteinander elektrisch verbindbar sind, derart, dass die Speichermodule (5) der Traktionsenergiespeichereinrichtungen durch elektrisches Verbinden der Verbindungsanschlüsse (8) seriell verschaltet sind, so dass sich eine Systemspannung für die Anordnung in Höhe der Summe der Einzelspannungen der Speichermodule (5) ergibt und Haupt- und Nebenaggregate über die Hochvoltverteiler-Anschlüsse (9; 209a, 209b) mit der Systemspannung versorgbar sind.

2. Anordnung (1; 100) nach Anspruch 1, **dadurch gekennzeichnet,**
(a) **dass** die Hochvoltverteiler (7) jeweils eine erste Leitung (10) und eine zweite Leitung (11) aufweisen, von denen eine als Plusleitung und eine als Minusleitung dient, und jeweils einer der zwei Kontakte der Hochvoltverteiler-Anschlüsse mit der ersten Leitung (10) und der andere Kontakt mit der zweiten Leitung (11) zur Ausbildung eines zweipoligen Anschlusses verbunden ist; und
(b) **dass** die Hochvoltverteiler (7) über die Hochvoltverteiler-Anschlüsse (9) parallel miteinander verschaltet sind.

3. Anordnung nach Anspruch 2, **dadurch gekennzeichnet,**
(a) **dass** bei einer ersten (2) der mindestens zwei Traktionsenergiespeichereinrichtungen (2, 3) der zweite Kontakt des Verbindungsanschlusses (8), der nicht mit einem ersten Pol (6a) der Batterieschützbox (6) verbunden ist, mit der ersten Leitung (10) des Hochvoltverteilers (7) verbunden ist, wobei die zweite Leitung (11) des Hochvoltverteilers (7) mit dem zweiten Pol (6b) der Batterieschützbox (6) verbunden ist; und
(b) **dass** der Verbindungsanschluss (8) der zweiten Traktionsenergiespeichereinrichtung (3) oder der weiteren Traktionsenergiespeichereinrichtungen (3) zweipolig mit dem zweipoligen Anschluss (6a, 6b) der Batterieschützbox (6) der jeweiligen Energiespeichereinrichtung verbunden ist.

4. Anordnung (200) nach Anspruch 1, **gekennzeichnet durch** eine Anordnung aus genau zwei Energiespeichereinrichtungen (202; 203), wobei alle elektrische Kontakte der Hochvoltverteiler-Anschlüsse (209b) der ersten Energiespeichereinrichtung (202) auf Minus-Potential der Gesamtsystemspannung liegen und alle elektrischen Kontakte der Hochvoltverteiler-Anschlüsse (209a) der zweiten Energiespeichereinrichtung (203) auf Plus-Potential der Gesamtsystemspannung liegen.

5. Anordnung (200) nach Anspruch 4, **dadurch gekennzeichnet, dass** der Hochvoltverteiler (207) der zweiten Energiespeichereinrichtung (203) in Reihe mit dem Speichermodul (5) der zweiten Energiespeichereinrichtung (203) geschaltet ist, welches über den Verbindungsanschluss (8) der zweiten Energiespeichereinrichtung (203) und über den Verbindungsanschluss (8) der ersten Energiespeichereinrichtung (202) in Reihe mit dem Speichermodul (5) der ersten Energiespeichereinrichtung (202) geschaltet ist, und dass das Speichermodul (5) der ersten Energiespeichereinrichtung (202) in Reihe mit dem Hochvoltverteiler (207) der ersten Energiespeichereinrichtung (202) geschaltet ist.

6. Anordnung (200) nach Anspruch 5, **dadurch gekennzeichnet, dass** die erste Energiespeichereinrichtung (202) am Gehäuse (4) einen zweipoligen Generatoranschluss (29) zum Anschluss eines Generators (29a) aufweist, wobei der Hochvoltverteiler (207) der ersten Energiespeichereinrichtung (202) mit einem ersten Pol des Generatoranschlusses (29) verbunden ist und der Hochvoltverteiler (207) der zweiten Energiespeichereinrichtung (203) über die Verbindungsanschlüsse (8) der ersten und zweiten Energiespeichereinrichtungen (202, 203) mit dem zweiten Pol des Generatoranschlusses (29) elektrisch verbunden ist.

7. Anordnung (200) nach Anspruch 6, **gekennzeichnet durch** einen Gleichstrom-Ladeanschluss (30) am Gehäuse der ersten Energiespeichereinrichtung zur Aufladung des Speichermoduls (5) der ersten Energiespeichereinrichtung (202) und des Speichermoduls (5) der zweiten Energiespeichereinrichtung (203), wobei ein erster Pol des Gleichstrom-Ladeanschlusses (30) über eine Absicherung (6c) und eine Trennvorrichtung (6d), die in der Schützbox (206) angeordnet sind, mit dem Hochvoltverteiler (207) der ersten Energiespeichereinrichtung (202) verbunden ist und ein zweiter Pol des Gleichstrom-Ladeanschlusses (30) über eine Absicherung (6c) und eine Trennvorrichtung (6d), die in der Schützbox (206) angeordnet sind, mit einem Verbindungspfad (214, 215a) verbunden ist, der den zweiten Pol des Generatoranschlusses (30) mit einem Pol des Verbindungsanschlusses (8) der ersten Energiespeichereinrichtung (202) verbindet.

8. Anordnung nach einem der vorhergehenden Ansprüche, **dadurch gekennzeichnet,**
(a) **dass** die Anschlüsse an einer Gehäusewand des Gehäuses (4), die benachbart zu dem Hochvoltverteiler (7; 207) ist, angeordnet sind; und/oder
(b) **dass** das Speichermodul (5) als Batteriezellenpack ausgeführt ist.

9. Kraftfahrzeug, insbesondere Nutzfahrzeug, mit einer Anordnung (1; 100; 200) nach einem der vorhergehenden Ansprüche 1 bis 8.
